Europäisches Patentamt

European Patent Office

Office européen des brevets

(19)

(11) Veröffentlichungsnummer: **0 039 497**
**B1**

(12) # EUROPÄISCHE PATENTSCHRIFT

(45) Veröffentlichungstag der Patentschrift:
01.08.84

(51) Int. Cl.³: **G 02 C 7/02**

(21) Anmeldenummer: **81103320.8**

(22) Anmeldetag: **02.05.81**

(54) Multifokale Brillenlinse mit gebietsweise gleitendem Brechwert.

(30) Priorität: **02.05.80 DE 3016935**

(43) Veröffentlichungstag der Anmeldung:
**11.11.81 Patentblatt 81/45**

(45) Bekanntmachung des Hinweises auf die Patenterteilung:
**01.08.84 Patentblatt 84/31**

(84) Benannte Vertragsstaaten:
**AT CH FR GB IT LI NL SE**

(56) Entgegenhaltungen:
**EP - A - 0 027 339**
**FR - A - 2 344 043**
**US - A - 3 711 191**

(73) Patentinhaber: **Firma Carl Zeiss, D-7920 Heidenheim (Brenz) (DE)**

(72) Erfinder: **Fürter, Gerhard, Dipl.-Math., Hegelstrasse 124, D-7080 Aalen (DE)**
Erfinder: **Lahres, Hans, Am Sattel 5, D-7080 Aalen-Wasseralfingen (DE)**

EP 0 039 497 B1

## Beschreibung

Die vorliegende Erfindung betrifft eine multifokale Brillenlinse mit gebietsweise gleitendem Brechwert. Solche Brillenlinsen werden allgemein als Gleitsichtlinsen bezeichnet.

Diejenige Fläche der Brillenlinse, welche den gewünschten gleitenden Brechwertverlauf der Linse bewirkt, heisst Gleitsichtfläche. In ihrem oberen Teil liegt die Fernsichtzone, in ihrem unteren Teil die Nahsichtzone. Zwischen diesen beiden Zonen liegt die Progressionszone, in der der Fernsicht-Brechwert kontinuierlich in den Nahsicht-Brechwert übergeht. Lässt der Benutzer einer solchen Brillenlinse den Blick geradeaus von oben nach unten wandern, so bestimmt der vorgegebene Brechwertverlauf zu jeder Neigung des Blicks die Entfernung des scharf abgebildeten Objektes. Zu jeder Objektentfernung gehört eine entsprechende Einwärtsbewegung des Augenpaares. Deshalb durchdringen die Sehstrahlen jedes Auges bei der beschriebenen Blickbewegung die Gleitsichtfläche längs einer ganz bestimmten Linie, der Hauptblicklinie. Diese ist also eine zur Nase hin geschwungene Kurve auf der Gleitsichtfläche. Sie teilt diese Fläche in einen nasalen und einen temporalen Bereich.

Es sind eine ganze Reihe von Gleitsichtlinsen bekannt. Bei den meisten dieser Linsen, wie sie z. B. in den DE-Auslegeschriften 20 44 639, 23 36 708, 24 39 127, DE-OS 28 14 916 und der DE-OS 29 18 310 beschrieben sind, ist die Progressionslinie bzw. der Hauptmeridian als sogenannte ombilische Linie ausgebildet. Diese Linie folgt im allgemeinen nicht dem Verlauf der oben definierten Hauptblicklinie. Die ombilische Ausbildung bedeutet, dass an jedem Punkt dieser Linie die Flächenkrümmungen gleich gross sind. Damit ist erreicht, dass der Flächen-Astigmatismus auf dieser Linie den Wert Null hat.

Minkwitz hat in einer in der Zeitschrift Optica Acta, Vol. 10, No. 3, July 1963, S. 223/227 veröffentlichten Arbeit nachgewiesen, dass sich bei einer Brillenlinse mit ombilischer Meridianlinie der Flächenastigmatismus in Richtung senkrecht zu dieser Linie doppelt so stark ändert wie der Betrag der Änderung der mittleren Flächenbrechkraft längs der Meridianlinie.

Es hat nicht an Versuchen gefehlt, durch eine besondere Gestaltung der Gleitsichtfläche die durch die Verwendung einer ombilischen Linie hervorgerufenen Abbildungsfehler auf ein verträgliches Mass zu reduzieren.

So ist es aus der DE-AS 20 44 639 bekannt die Gleitsichtfläche so auszubilden, dass beim Schnitt mit Horizontalebenen jeweils Schnittkurven entstehen, welche die Form von Kegelschnitten haben. Damit lässt sich ein gewisser Kompromiss zwischen Astigmatismus, Einstellfehler und Verzeichnung erreichen, der jedoch höheren Ansprüchen nicht genügt.

Aus der DE-AS 23 36 708 ist es bekannt, eine zur ombilischen Meridianlinie symmetrische Gleitsichtfläche so auszubilden, dass die Änderungsgeschwindigkeit der durch die Brillenlinse betrachteten Verformung vertikaler oder horizontaler Linien bei einer Schwenkung des Auges möglichst klein ist. Diese Minimierung der Änderungsgeschwindigkeit ist eine von mehreren Möglichkeiten, die Verträglichkeit einer Brillenlinse gegenüber dem bisherigen Stand der Technik zu verbessern; ihre alleinige Anwendung führt jedoch nicht zu optimalen Ergebnissen.

In der DE-OS 29 18 310 ist vorgeschlagen, die Gleitsichtfläche aus zwei geometrisch verschiedenen Flächen zusammenzusetzen. Durch diese Massnahme soll erreicht werden, dass zu beiden Seiten eines relativ breiten Progressions- und Nahsichtbereichs die sog. Schrägsichtverzerrung klein bleibt. Bei dieser, zur ombilischen Meridianlinie symmetrischen Lösung ist das Verhalten längs der Schnittlinien der beiden geometrisch verschiedenen Flächen nachteilig, da die Unstetigkeit der Krümmungen auch eine Unstetigkeit von Astigmatismus und Einstellfehler bewirkt.

Bei der aus DE-AS 24 39 137 bekannten Brillenlinse soll durch eine besondere Ausgestaltung der seitlichen Randteile der Progressionszone und der Nahsichtzone die schräge Verzeichnung in diesen Teilen zum Verschwinden gebracht werden. Andere Abbildungsfehler, insbesondere Astigmatismus sind dadurch nicht hinreichend kompensierbar.

Bei der ebenfalls zur ombilischen Meridianlinie symmetrischen Brillenlinse nach DE-OS 28 14 916 ist die Gleitsichtfläche in ihrem Krümmungsverlauf formelmässig festgelegt mit dem Ziel, ein möglichst grosses Fernteil und ein grosses Nahteil zu erreichen. Es ist ohne weiteres verständlich, dass sich damit bei einer annehmbaren Länge des Progressionsbereichs die Abbildungsfehler nicht über die gesamte Fläche hinreichend klein halten lassen.

Aus der DE-OS 26 10 203 ist es bekannt, den Hauptmeridian in einem Teil nicht ombilisch auszubilden. Die Linien gleichen mittleren Flächenbrechwerts verlaufen vorzugsweise horizontal und erstrecken sich beidseitig der Hauptblicklinie bis zum Rand der Brillenlinse. Durch diese einschränkende Massnahme sind nicht alle Abbildungsfehler optimal korrigierbar.

Aus der nicht vorveröffentlichten EP-A-80 303 486.7 ist eine Gleitsichtlinse bekannt, deren Hauptmeridian in der Progressions- und in der Nahsichtzone nicht ombilisch ist. Die Gleitsichtfläche ist so berechnet, dass beim Blick durch die Linse horizontale in horizontale und vertikale in vertikale Gerade übergehen, d.h. dass keine Schrägverzeichnung entsteht. Damit lässt sich jedoch keine zum angenehmen Sehen hinreichende Korrektur aller Abbildungsfehler erreichen.

Aus einer sehr frühen Veröffentlichung, der DE-PS 1 145 820 ist eine Gleitsichtlinse bekannt, bei der sich in jedem Punkt der Gleitsichtfläche die Hauptkrümmungsradien um einen konstanten Betrag unterscheiden; der Flächen-Astigmatismus ist also dem Betrage nach konstant. Man hat damit erreicht, dass der Astigmatismus in den seitlichen Bereichen gegenüber bekannten Lösungen kleiner wird, man hat jedoch mit der verwendeten rotationssymmetrischen Gleitsichtfläche keine hinreichende Korrektion aller Abbildungsfehler erreicht.

Es ist nun die Aufgabe der vorliegenden Erfindung, eine multifokale Brillenlinse mit gebietsweise gleitendem Brechwert, d.h. eine Gleitsichtlinse zu schaffen, die bei einer kurzen Progressionszone in jedem Bereich allen, den jeweiligen Sehaufgaben entsprechenden monokularen und binokularen Anforderungen an Schärfe und Verträglichkeit weitgehend genügt.

Diese Aufgabe wird gemäss der Erfindung durch eine Gleitsichtlinse gelöst, die sich durch die Kombination der Merkmale des Anspruchs 1 auszeichnet:

Bei vorgegebener dioptrischer Wirkung ist durch die Kombination dieser Merkmale nach Vorgabe der übrigen Linsenparameter (Brechzahl, Dicke, andere Fläche) die gesamte Gleitsichtfläche hinreichend bestimmt. Man erhält eine Fläche, deren einzelne Bereiche keinen formelmässigen Zusammenhang aufweisen, die also als Asphäre im allgemeinsten Sinne anzusprechen ist.

Bei der beschriebenen Gleitsichtlinse ist erstmals die Empfindlichkeit des brillenbewehrten Augenpaares gegenüber binokular nicht harmonisierenden Sehrichtungen berücksichtigt.

Eine Brillenlinse weist im allgemeinen in allen Bereichen ausserhalb der optischen Achse eine prismatische Wirkung auf, die zum Rande der Linse immer stärker wird. Blickt ein Augenpaar beim Betrachten eines Objektes durch Bereiche mit unterschiedlicher prismatischer Wirkung, wie dies beispielsweise bei Gleitsichtlinsen bekannter Art der Fall ist, so stimmen die Richtungen der augenseitigen Sehstrahlen nicht überein, es tritt also eine horizontale und eine vertikale Richtungsdifferenz auf.

Im indirekten Sehen, d.h. beim Blick auf ein festes Objekt beeinflussen horizontale Richtungsdifferenzen das quer-disparate Tiefensehen, z.B. mit der Folge, dass die Punkte eines ebenen Objektes nicht mehr in einer Ebene zu liegen scheinen.

Im direkten Sehen ist der Ausgleich horizontaler Richtungsdifferenzen durch die Vergenz der Augen innerhalb eines relativ grossen Toleranzbereichs möglich. Der Ausgleich vertikaler Richtungsdifferenzen im direkten Sehen durch fusionale Vertikalvergenz ist dagegen nur in engen Grenzen möglich. Beispielsweise ist die binokulare prismatische Vertikal-Toleranz für die Höhenzentrierung zweier Linsen nur 0.5 cm/m. Je stärker die vertikale Richtungsdifferenz wird, desto unbequemer wird die Fusion. Sind Richtungsdifferenzen zu gross, so kommt kein binokularer Seheindruck mehr zustande. Entweder wird der Brillenträger den Blick durch solche Bereiche der Brillenlinse vermeiden oder es wird nur der Seheindruck vom linken oder vom rechten Auge verarbeitet. Auch können vertikale Richtungsdifferenzen beim Lesen, vor allem beim Rücksprung der Augen an den Zeilenanfang zu erheblichen Orientierungsschwierigkeiten führen.

Bei der Brillenlinse nach der Erfindung ist durch entsprechende Wahl der Verzeichnung auf beiden Seiten der Hauptblicklinie dafür gesorgt, dass die horizontalen und vertikalen Richtungsdifferenzen im direkten und indirekten Sehen auf verträgliche Werte reduziert sind. Dabei ist bewusst darauf verzichtet, die Verzeichnung so zu wählen, dass in gewissen Gebieten waagerechte Linien in waagerechte und senkrechte Linien in senkrechte abgebildet werden, wie dies bei einigen bekannten Gleitsichtlinsen der Fall ist. Man nimmt vielmehr eine bezüglich des ruhenden und des blickenden Auges ausgewogene Verzeichnung von annähernd der Gestalt in Kauf, die der Benutzer der Brillenlinse von den entsprechenden Einstärkenbrillen her gewöhnt ist.

Vorteilhaft ist es, die Gleitsichtfläche so auszubilden, dass über die gesamte Fläche Punkte mit gleichem horizontalen Abstand von der Hauptblicklinie und gleicher Höhe angenähert gleicher Werte von Astigmatismus und Einstellfehler aufweisen. Durch diese Horizontalsymmetrie wird erreicht, dass der Benutzer mit beiden Augen ein gleich scharfes oder gleich unscharfes Bild des Objektes sieht; dadurch wird das binokulare Sehen sehr unangenehm.

Aus dem Stand der Technik bekannte Brillenlinsen, die bezüglich einer ebenen ombilischen Meridianlinie symmetrisch sind, müssen beim Einsetzen in die Brillenfassung etwa um 10° gedreht werden, um der Konvergenz der Augen beim Blick in die Nähe Rechnung zu tragen. Es ist selbstverständlich, dass damit bezüglich aller Abbildungseigenschaften die Horizontalsymmetrie verloren geht.

Bei Gleitsichtlinsen mit kurvenförmig verlaufender ombilischer Linie, wie sie aus dem Stand der Technik bekannt sind, ist eine solche Drehung beim Einsetzen in die Brillenfassung nicht notwendig. Diese Linsen weisen jedoch keine horizontal-symmetrischen Eigenschaften auf.

Brillenlinsen nach der Erfindung müssen beim Einsetzen in die Brillenfassung nicht gedreht werden, d.h. sie behalten auch in Gebrauchsstellung ihre vorteilhaften Eigenschaften.

Bei der Gleitsichtlinse nach der Erfindung hat der längs der Hauptblicklinie vorhandene Astigmatismus im unteren Bereich der Fernsichtzone einen Wert nahe Null, erreicht in der Progressionszone einen Maximalwert und fällt bis zur Nahsichtzone wieder auf einen Wert nahe Null ab. Dieser Verlauf des Astigmatismus ist mathematisch schwerer zu beschreiben als die ombilische Linie, er schafft jedoch neue Freiheitsgrade. Durch diese lassen sich die Abbildungseigenschaften seitlich von der Hauptblicklinie verbessern. Die ganze Linse ist bezüglich aller Ziele leichter korrigierbar.

Bei der Berechnung der neuen Gleitsichtfläche können zweckmässig unter Beachtung der Kriterien des Anspruchs 1 mehrere Gleitsichtflächen mit verschiedenen verträglichen Werten der Richtungsdifferenz und der Verzeichnung errechnet werden. Aus diesem lassen sich diejenigen Flächen auswählen, für die der Astigmatismus über die gesamte Fläche günstig verteilt und dabei möglichst gering ist.

Bei der Gleitsichtlinse nach Anspruch 3 nähert sich der Brechwert seitlich der Progressions- und Nahsichtzone den Werten der Fernsichtzone an. Damit sind dieselben Verhältnisse geschaffen wie bei Mehrstärkenbrillenlinsen.

Die Gestalt der Gleitsichtfläche nach der Erfindung weicht von der Gestalt bekannter Gleitsichtflächen grundsätzlich ab. Schneidet man die Gleitsichtfläche mit einer horizontalen Ebene, so ergibt sich eine Kurve, die den Verlauf der horizontalen Krümmung vom nasalen zum temporalen Flächenrand beschreibt. Beim Schnitt mit mehreren horizontalen Ebenen ergeben sich Kurven, die für objektseitig ausgeführte Gleitsichtflächen folgendes Aussehen haben.

I. In der Nahsichtzone unterscheiden sich die horizontalen Krümmungen im Gebiet guter Sicht nur wenig und nehmen zur Seite hin stark ab. Eine erneute Zunahme der Krümmung in der Nähe des Linsenrandes ist möglich und u.a. von der Breite der Linse abhängig. Der Beginn einer solcher Zunahme kann nasal und temporal etwas verschieden sein.

II. In der Progressionszone entspricht im unteren Teil der Kurvenverlauf noch im wesentlichen dem der Nahsichtzone. Mit zunehmender Nähe zur Fernsichtzone nehmen die horizontalen Krümmungen, beginnend in der Umgebung des Randes der Zone guter Sicht zur Seite hin, zunächst merklich zu und danach wieder ab. Diese Art des Krümmungsverlaufs kann nasal und temporal etwas unterschiedlich ausgeprägt sein und kann sich bis in den unteren Teil der Fernsichtzone erstrecken.

III. In der Fernsichtzone gehen die Kurven mehr und mehr in einen Verlauf über, den Flächen für Einstärkenlinsen haben.

Keine der Schnittkurven in den Zonen I und II stellt einen Kegelschnitt dar.

Führt man die Gleitsichtfläche augenseitig aus, d.h. bildet man die dem Auge zugewandte Linsenfläche als Gleitsichtfläche aus, so ergeben sich beim Schnitt mit horizontalen Ebenen Kurven, deren Krümmungen gerade umgekehrt verlaufen wie vorstehend unter I bis II angeführt. Die dort gemachten Aussagen stimmen also auch für diesen Fall, wenn man die Begriffe zunehmende und abnehmende Krümmung vertauscht.

Bei der neuen Gleitsichtfläche schneiden nicht mehr alle Linien konstanten mittleren Flächenbrechwerts die Hauptblicklinie. Es gibt Linien, die am Flächenrand beginnen und auch enden, ohne die Hauptblicklinie berührt oder geschnitten zu haben. Auch Inseln sind möglich, d.h. geschlossene Linien, die nur innerhalb der Fläche verlaufen.

Es ist vorteilhaft, die Gleitsichtfläche zweimal stetig differenzierbar auszugestalten, so dass der Verlauf des Astigmatismus und des Einstellfehlers stetig ist.

Die Herstellung der Brillenlinsen nach der Erfindung ist mit Hilfe von numerisch codierten Bearbeitungsmaschinen möglich. Solche Maschinen sind bekannt und auf dem Markt erhältlich. Es ist auch möglich, Brillenlinsen nach der Erfindung aus organischem Material herzustellen und dazu beispielsweise die bekannte Technik des Formgiessens zu verwenden.

Die Erfindung wird im folgenden anhand der Fig. 1 bis 7 der beigefügten Zeichnungen näher erläutert.

Im einzelnen zeigen:

Fig. 1 eine Gleitsichtfläche;

Fig. 2 eine Skizze zur Erklärung des Begriffs Richtungsdifferenz;

Fig. 3 den Verlauf der vertikalen Richtungsdifferenzen für eine bekannte Gleitsichtlinse und für ein Ausführungsbeispiel der Erfindung, wobei ein Durchmesser der Linse von etwa 60 mm berücksichtigt ist;

Fig. 4 die Verzeichnung eines äquidistanten Objektgitters durch die Brillenlinse gemäss einem Ausführungsbeispiel;

Fig. 5 die Verteilung der Linien gleichen Astigmatismus über eine Gleitsichtlinse nach einem Ausführungsbeispiel;

Fig. 6 Linien konstanten mittleren Flächenbrechwerts für eine Gleitsichtfläche nach einem Ausführungsbeispiel;

Fig. 7 den Verlauf der horizontalen Krümmungen in mehreren horizontalen Flächenschnitten durch eine Gleitsichtfläche nach einem weiteren Ausführungsbeispiel.

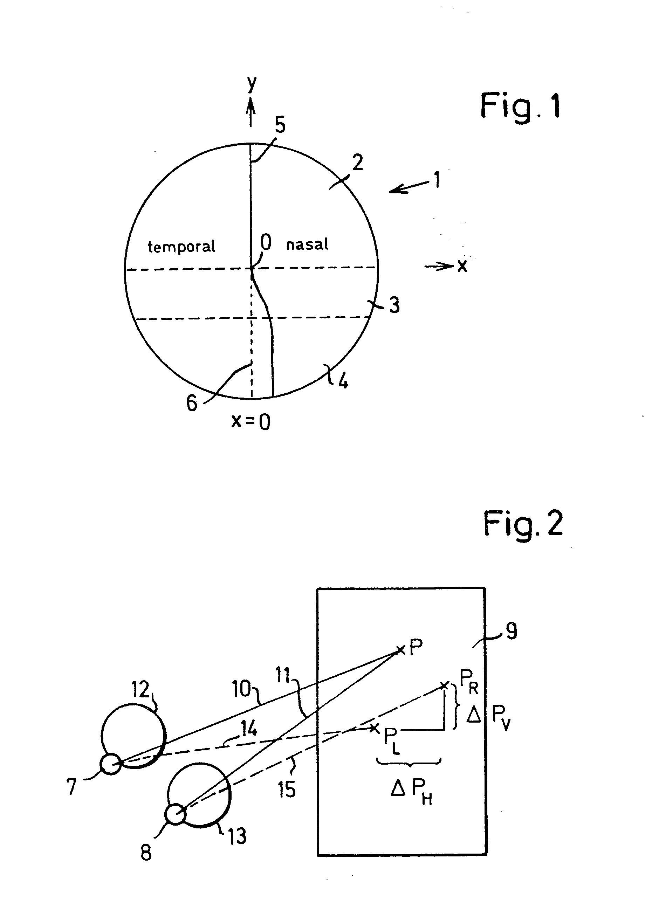

Fig. 1 zeigt eine Gleitsichtfläche 1, die in ihrem oberen Teil aus der Fernsichtzone 2 besteht. An diese schliesst sich eine Progressionszone 3 an, die in die Nahsichtzone 4 übergeht. Blickt das hinter der Brillenlinse 1 gedachte Auge durch die Fernsichtzone geradeaus auf einen unendlich weit entfernten Punkt, so liegt der Durchstosspunkt des Sehstrahls im Fernteil 2 auf der Linie 5. Nähert sich, bei sich senkendem Blick der Objektpunkt dem Auge bis auf Leseentfernung, so führt das Augenpaar eine Konvergenzbewegung aus. Der Durchstosspunkt der Sehstrahlen folgt der Kurve 5, die im folgenden als Hauptblicklinie bezeichnet wird. Diese Linie teilt die Brillenlinse 1 in einen nasalen und einen temporalen Bereich. Die Mittellinie der Linse 1, d.h. die Linie $\times = 0$ ist mit 6 bezeichnet.

In der Darstellung der Fig. 2 sind mit 7 und 8 schematisch zwei Augen bezeichnet. Blicken diese im direkten Sehen auf einen Punkt P in der Objektebene 9, so verlaufen die Sehstrahlen entsprechend der Linien 10 und 11. Werden vor den Augen 7, 8 Brillenlinsen 12, 13 angeordnet, so erscheint der Punkt P, bedingt durch die prismatischen Wirkungen der Brillenlinsen für das linke Auge 7 bei $P_L$ und für das rechte Auge 8 bei $P_R$. Die augenseitigen Sehstrahlen verlaufen jetzt entlang der Linien 14 und 15. Die vertikale Lagedifferenz ist mit $\triangle P_v$ bezeichnet. Teilt man diese

durch die Objektentfernung, so erhält man ein Mass für die vertikale Richtungsdifferenz. Entsprechendes gilt für die horizontale Lagedifferenz $\triangle P_H$. Für das direkte Sehen gilt eine entsprechende Betrachtung.

Wie man aus Fig. 2 erkennt, verläuft der Sehstrahl 14 durch den nasalen Bereich der Brillenlinse 12 und der Sehstrahl 15 verläuft durch den temporalen Bereich der Brillenlinse 13. Es wird daraus verständlich, dass man die Verhältnisse der Fig. 2 auch an einer einzigen Brillenlinse betrachten kann. Die prismatischen Wirkungen in einander entsprechenden Punkten des nasalen und des temporalen Bereichs verursachen die Richtungsdifferenzen.

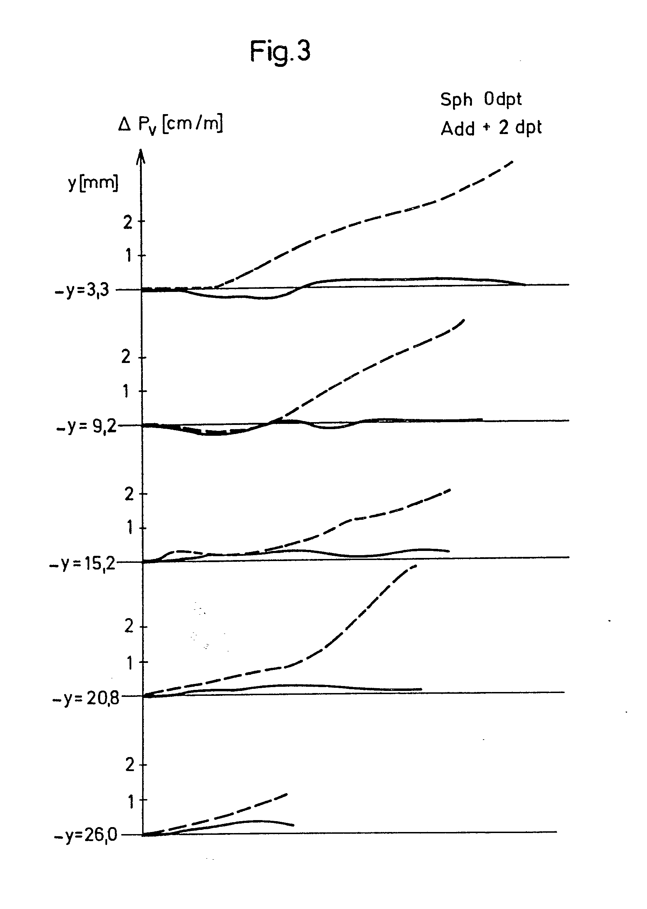

Fig. 3 zeigt die durch eine bekannte Gleitsichtlinse verursachten vertikalen Richtungsdifferenzen, die für verschiedene, vom Punkt 0 der Fig. 1 aus gerechnete Horizontalschnitte gemäss der gestrichelten Kurven verlaufen. Man erkennt, dass zum Rand der Brillenlinse hin die Richtungsdifferenzen beträchtliche Werte erreichen.

Die Brillenlinse nach der Erfindung ist nun so errechnet, dass die Verzeichnung seitlich der Hauptblicklinie 5 in der Progressions- und Nahsichtzone 3, 4 in Werte übergeht, die sich der Verzeichnung in der Fernsichtzone annähern, wobei die Verzeichnung an jedem Punkt so gewählt ist, dass die horizontalen und vertikalen Richtungsdifferenzen verträgliche Werte nicht überschreiten.

Fig. 3 zeigt das erzielte Ergebnis für die vertikale Richtungsdifferenz durch die ausgezogen dargestellten Kurven. Man sieht, dass die vertikale Richtungsdifferenz in jedem Fall klein und unter einem Wert von 0,5 cm/m bleibt.

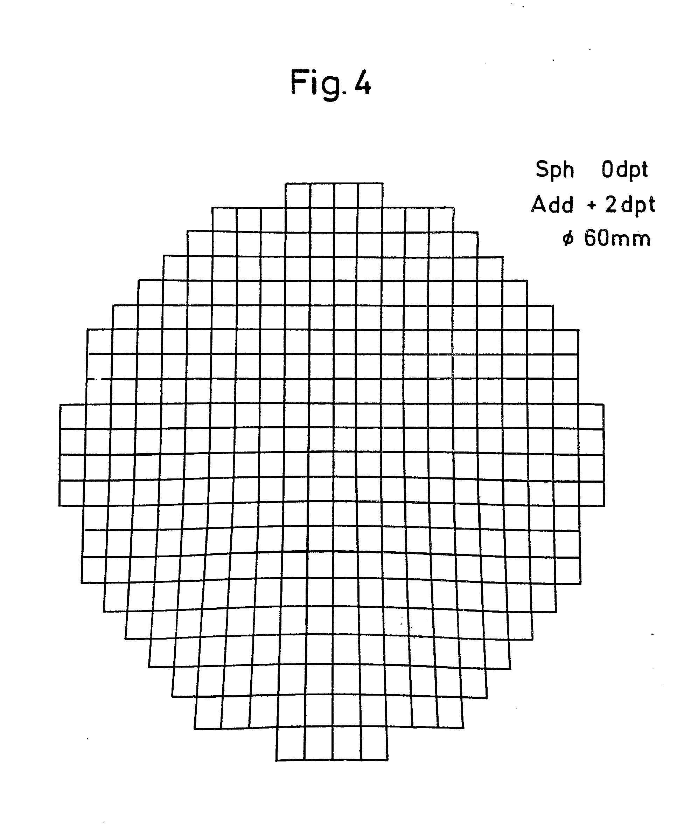

Fig. 4 zeigt die Abbildung eines äquidistanten Objektgitters durch eine Linse, welche die beschriebenen vertikalen Richtungsdifferenzen der Fig. 3 hat. Man erkennt, dass die Gitterlinie zur Nahsichtzone hin etwas gekrümmt verlaufen. An einen solchen Verlauf ist der Benutzer einer Brillenlinse von der entsprechenden Einstärkenbrille für die Nähe her gewöhnt und gleicht diese ohne weiteres aus, d.h. er empfindet diese Linien als gerade.

Es ist bekannt, dass bei positiven Einstärkenlinsen eine kissenförmige und bei negativen Einstärkenlinsen eine tonnenförmige Verzeichnung besteht. An diese ist der Benutzer gewöhnt und sein Gehirn verarbeitet das tatsächlich gesehene Bild zu einem Bild mit «geraden» Linien. Genau von dieser Eigenschaft macht die Erfindung Gebrauch.

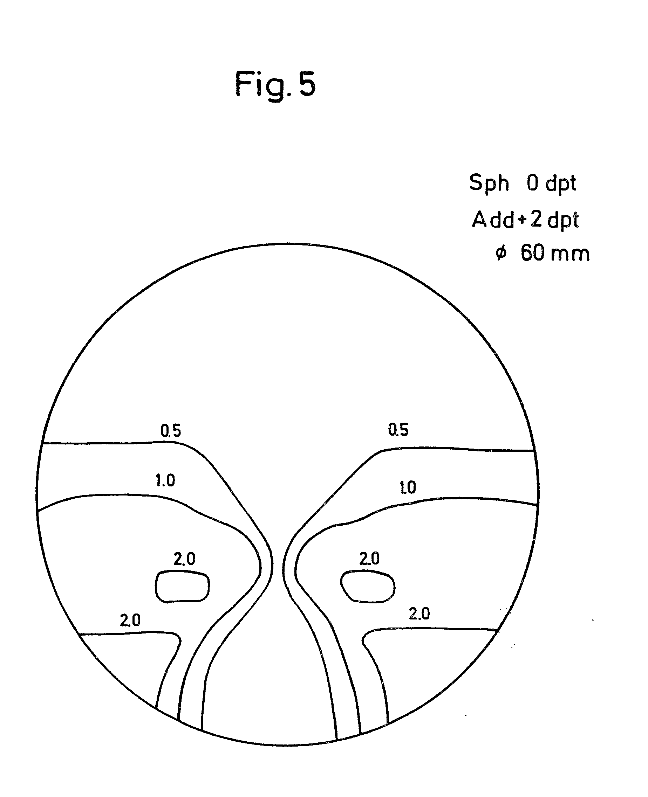

Fig. 5 zeigt Linien gleichen Astigmatismus in ihrer Verteilung über ein Ausführungsbeispiel der Gleitsichtlinse. Man erkennt, dass die Fernsichtzone gross und gut korrigiert ist, dass ein verhältnismässig grosses und gut korrigiertes Gebiet in der Nahsichtzone vorhanden ist und dass der Astigmatismus für eine Gleitsichtlinse äusserst niedrig ist. Das gut korrigierte Gebiet in der Nahsichtzone ist der eigentliche Nahsichtbereich.

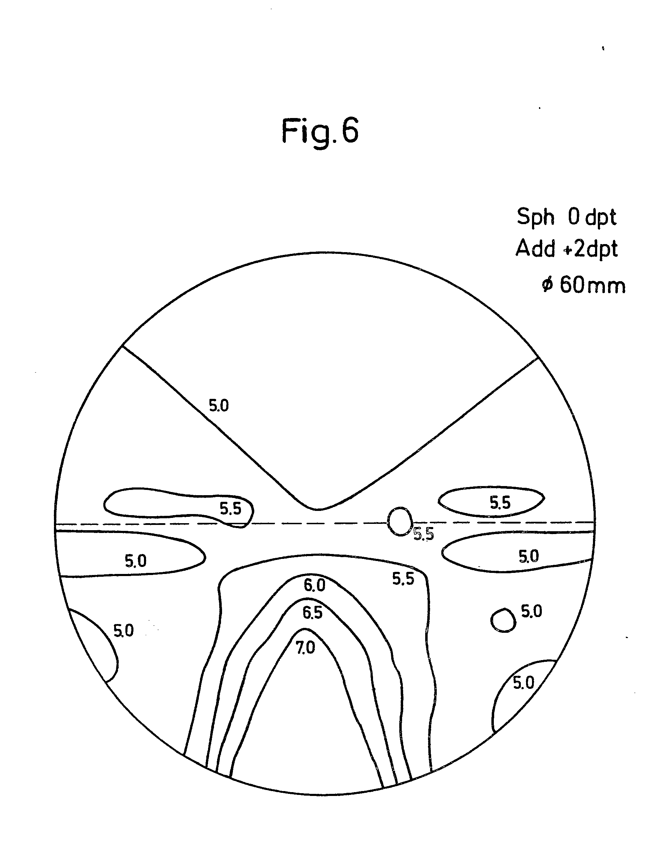

Fig. 6 zeigt Linien mittleren Flächenbrechwerts für eine Gleitsichtfläche, die im Fernteil einen Flächenbrechwert von +5 dpt und im Nahteil einen Flächenbrechwert von +7 dpt aufweist. Kombiniert man diese Fläche mit einer zweiten Linsenfläche die ein Flächenbrechwert von −5 dpt hat, so erhält man eine Brillenlinse sph 0 dpt, Add +2 dpt.

Man erkennt, dass der Flächenbrechwert weitgehend horizontal-symmetrisch zu der hier von rechts nach links verlaufenden Hauptblicklinie ist. Er erreicht seitlich der Progressions- und der Nahsichtzone den Wert der Fernsichtzone. Gut zu sehen ist auch der Übergang des Flächenbrechwerts von der Fern- zur Nahsichtzone längs der Hauptblicklinie.

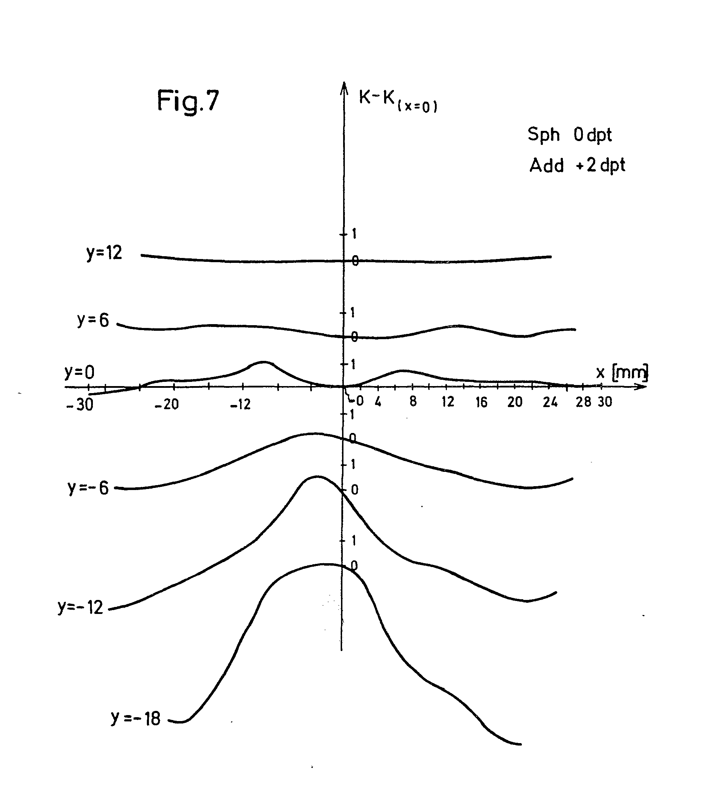

Aus Fig. 7 ist die Gestalt einer objektseitig ausgeführten Gleitsichtfläche erkennbar. Dargestellt ist die Differenz $K-K_{(x=0)}$ der horizontalen Krümmungen für verschiedene horizontale Schnitte. Die Krümmung K ist gemäss $K = 1000/Radius$ definiert. Die Kurven zeigen die Krümmung in jedem Punkt x, wobei jeweils die Krümmung im Punkt $x = 0$, d.h. entlang der Kurve 6 in Fig. 1 abgezogen ist. Man erkennt, dass der Flächenverlauf insbesondere im oberen Teil der Progressionszone 2 völlig neuartig ist; die Krümmung nimmt zur Seite hin zunächst merklich zu und danach wieder ab.

Die Hauptblicklinie verläuft auch in der Darstellung der Fig. 7 von rechts nach links.

Es ist klar, dass die Gestalt der Gleitsichtfläche wesentlich von der optischen Wirkung der Fern- und Nahsichtzone abhängt. Der prinzipielle Verlauf der Krümmungen bleibt jedoch stets erhalten.

**Patentansprüche**

1. Multifokale Brillenlinse mit gebietsweise gleitendem Brechwert (Gleitsichtlinse) mit einer Gleitsichtfläche, die eine Fernsicht- und eine Nahsichtzone sowie eine dazwischenliegende Progressionszone aufweist und die durch die von der Fern- zur Nahsichtzone als eine zur Nase hin geschwungene Kurve verlaufende Hauptblicklinie in ein nasales und ein temporales Gebiet geteilt wird, gekennzeichnet durch die Kombination folgender Merkmale:
a) die gesamte Gleitsichtfläche ist als Asphäre ausgebildet, die aus einzelnen Bereichen zusammengesetzt und zweimal stetig differenzierbar ist;
b) in der kurzen Progressionszone (3) existiert längs der Hauptblicklinie (5) Astigmatismus, der Werte von 0,50 dpt nicht überschreitet;
c) die prismatischen Wirkungen nasal und temporal der Hauptblicklinie (5) in den bezüglich des binokularen Sehens korrespondierenden Durchblickstellen sind so gewählt, dass die horizontalen und vertikalen Richtungsdifferenzen im direkten und indirekten Sehen verträgliche Werte nicht überschreiten (0,5 cm/m für die vertikale Richtungsdifferenz).
d) die durch die prismatischen Wirkungen in den jeweils korrespondierenden Durchblickstellen induzierte Verzeichnung geht seitlich der Hauptblicklinie (5) in der Progressions- und der Nahsichtzone (3,4) in Werte über, die sich der seitlichen Verzeichnung in der Fernsichtzone annähern.

2. Gleitsichtlinse nach Anspruch 1, dadurch gekennzeichnet, dass über die gesamte Linse Punkte mit gleichem horizontalen Abstand von der Hauptblicklinie (5) und gleicher Höhe (y) angenähert gleiche Werte von Astigmatismus und Einstellfehler aufweisen.

3. Gleitsichtlinse nach Anspruch 1 oder 2, dadurch gekennzeichnet, dass der Brechwert seitlich der Hauptblicklinie (5) in der Progressions- und Nahsichtzone (3,4) sich den Werten der Fernsichtzone (2) annähert.

4. Gleitsichtlinse nach einem oder mehreren der Ansprüche 1–3, dadurch gekennzeichnet, dass der Astigmatismus längs der Hauptblicklinie (5) ausgehend von einem Wert nahe Null im unteren Bereich der Fernsichtzone (2) einen Maximalwert in der Progressionszone (3) erreicht und bis zur Nahsichtzone (4) wieder auf einen Wert nahe Null abfällt.

5. Gleitsichtlinse nach einem oder mehreren der Ansprüche 1–4, dadurch gekennzeichnet, dass der Schnitt der Gleitsichtfläche mit Horizontalebenen im oberen Teil der Progressionszone (3) Kurven bildet, deren Krümmung bei objektseitiger Lage der Gleitsichtfläche, beginnend in der Umgebung des Randes der Zone guter Sicht zur Seite hin zunächst merklich zu- und danach wieder abnimmt.

6. Gleitsichtlinse nach einem oder mehreren der Ansprüche 1–4, dadurch gekennzeichnet, dass der Schnitt der Gleitsichtfläche mit Horizontalebenen im oberen Teil der Progressionszone (3) Kurven bildet, deren Krümmung bei augenseitiger Lage der Gleitsichtfläche, beginnend mit der Umgebung des Randes der Zone guter Sicht zur Seite hin zunächst merklich ab- und danach wieder zunimmt.

## Claims

1. Multifocal spectacle lens with a dioptric power varying progressively between different zones (progressive lens) having a progressive surface which has a far-vision zone and a near-vision zone as well as an intermediate progressive zone and which is divided into a nasal region and a temporal region by a principal sight line being a curve swung toward the nose, characterized by the combination of the following features:
a) the entire progressive surface is developed as an asphere which is combined from individual zones and which is twice continuously differentiable;
b) in the short progressive zone (3) along the principal sight line (5) astigmatism exists which does not exceed values of 0,5 dpt;
c) the prismatic powers at viewing points nasal and temporal of the principal sight line (5) which correspond to each other with respect to binocular viewing are so selected, that the horizontal and vertical directional errors do not exceed tolerable values (0,5 cm/m for the vertical directional error);
d) the distortion induced by the prismatic powers existing in corresponding viewing points passes laterally of the principal sight line (5) in the progressive and near-vision zones (3,4) into values, which approach the lateral distortion of the far-vision zone.

2. Progressive lens according to claim 1, characterized by the fact that, over the entire lens, points of the same horizontal distance from the principal sight line (5) and the same height (y) have approximately the same values of the astigmatism and focusing error.

3. Progressive lens according to claim 1 or 2, characterized by the fact that the dioptric power laterally of the principal sight line (5) in the progressive and near-vision zones (3,4) approximates the value of the far-vision zone (2).

4. Progressive lens according to one or several of claims 1–3, characterized by the fact that the astigmatism along the principal sight line (5), starting from a value near to zero in the lower region of the far-vision zone (2), reaches a maximum value in the progressive zone (3) and when reaching the near-vision zone (4) has dropped again to a value near to zero.

5. Progressive lens according to one or several of claims 1–4, characterized by the fact that the intersection of its progressive surface with horizontal planes in the upper part of the progressive zone (3) forms curves the curvature of which, in case of a progressive surface on the object side of the lens, commencing in the vicinity of the edge of the zone of good vision, at first increases considerably in the laterally outward direction and then decreases again.

6. Progressive lens according to one or several of the claims 1–4, characterized by the fact that the intersection of its progressive surface with horizontal planes in the upper part of the progressive zone (3) forms curves whose curvature, in the case of a progressive surface on the eye side of the lens, commencing with the vicinity of the edge of the zone of good vision, at first considerably decreases in the laterally outward direction and then increases again.

## Revendications

1. Verre de lunettes multifocal, avec zones à puissance progressive (verre à focal continue) avec une surface à focale continue présentant une zone de vision éloignée et une zone de vision rapprochée ainsi que, entre elles, une zone progressive, et qui est subdivisée en un domaine nasal et un domaine temporal par la courbe de vision principale s'étendant de la zone de vision éloignée à la zone de vision rapprochée sous la forme d'une courbe incurvée vers le nez, caractérisé par la combinaison des caractéristiques suivantes:
a) la totalité de la surface à focale continue est formée comme une asphère, constituée de différents domaines et pouvant être toujours différenciée deux fois en continu;

b) dans la courte zone progressive (3), il existe le long de la courbe de vision principale (5) un astigmatisme qui ne dépasse pas des valeurs de 0,50 D;

c) les effets prismatiques, du côté nasal et du côté temporal de la courbe de vision principale (5), aux points de passage correspondants et relatifs à la vision binoculaire, sont choisis de façon que les différences directionnelles horizontales et verticales, en vision directe et indirecte, ne dépassent pas des valeurs admissibles (0,5 cm/m pour la différence directionnelle verticale);

d) la distorsion provoquée par les effets prismatiques, aux points de passage correspondants, prend, latéralement par rapport à la courbe de vision principale (5) dans la zone progressive et la zone de vision rapprochée (3, 4), des valeurs qui se rapprochent de la distorsion latérale dans la zone de vision éloignée.

2. Verre à focal continue selon la revendication 1, caractérisé en ce que, sur la totalité du verre, les points à même distance horizontale de la courbe de vision principale (5) et à même hauteur (y) présentent des valeurs sensiblement identiques de l'astigmatisme et du défaut de mise au point.

3. Verre à focale continue selon l'une quelconque des revendications 1 ou 2, caractérisé en ce que la puissance, latéralement par rapport à la courbe de vision principale (5) dans la zone progressive et la zone de vision rapprochée (3, 4), se rapproche des valeurs correspondant à la zone de vision éloignée (2).

4. Verre à focale continue selon l'une quelconque des revendications 1 à 3, caractérisé en ce que l'astigmatisme le long de la courbe de vision principale (5) atteint, en partant d'une valeur proche de zéro dans le domaine inférieur de la zone de vision éloignée (2), une valeur maximale dans la zone progressive (3), puis retombe à une valeur proche de zéro jusqu'à la zone de vision rapprochée (4).

5. Verre à focale continue selon l'une quelconque des revendications 1 à 4, caractérisé en ce que l'intersection de la surface à focale continue et de plans horizontaux dans la partie supérieure de la zone progressive (3) donne des courbes dont la courbure, quand la surface à focale continue est placée côté objet, augmente d'abord nettement, en commençant au voisinage du bord de la zone de bonne vision, puis diminue de nouveau.

6. Verre à focale continue selon l'une quelconque des revendications 1 à 4, caractérisé en ce que l'intersection de la surface à focale continue et de plans horizontaux dans la partie supérieure de la zone progressive (3) donne des courbes dont la courbure, quand la surface à focale continue est placée côté œil, diminue d'abord fortement en commençant au voisinage du bord de la zone de bonne vision, puis augmente de nouveau.

Fig.1

Fig.2

Fig. 3

0 039 497

## Fig. 4

Sph  0 dpt
Add + 2 dpt
$\phi$ 60mm

13

# Fig. 5

Sph  0 dpt
Add + 2 dpt
⌀  60 mm

# Fig.6

Sph  0 dpt
Add +2dpt
⌀ 60mm

Fig.7

K-K$_{(x=0)}$

Sph  0 dpt

Add  +2 dpt